# EUROPÄISCHE PATENTSCHRIFT

(11) **EP 3 191 733 B1**
(45) Veröffentlichungstag und Bekanntmachung des Hinweises auf die Patenterteilung: **13.03.2019**
(21) Anmeldenummer: 15756916.1
(22) Anmeldetag: 01.09.2015
(51) Int. Cl.: F16D 66/02

(54) **BREMSBACKE MIT VERSCHLEISSANZEIGER**
BRAKE SHOE HAVING A WEAR INDICATOR
MÂCHOIRE DE FREIN AVEC INDICATEUR D'USURE

(30) Priorität: 08.09.2014 DE 102014112868
(43) Veröffentlichungstag der Anmeldung: 19.07.2017
(73) Patentinhaber: TMD Friction Services GmbH, 51381 Leverkusen (DE)
(72) Erfinder: DOHLE, Achim, 51375 Leverkusen (DE); ROHRBERG, Bernd, 45359 Essen (DE); ROTHMANN, Werner, 45134 Essen (DE)
(74) Vertreter: Müller, Eckhard
(86) Internationale Anmeldenummer: PCT/EP2015/069901
(87) Internationale Veröffentlichungsnummer: WO 2016/037889

(56) Entgegenhaltungen:
- EP-B1- 0 754 875
- DE-A1-102006 039 590
- DE-A1-102008 032 818
- US-A1- 2007 252 719

## Beschreibung

Die Erfindung betrifft eine Bremsbacke für ein Bremssystem mit einem im Bereich des Reibbelags angebrachten Mittel, welches u.a. zur Erfassung des Reibbelag-Verschleißzustands dient. Die Bremsbacke eignet sich für Scheiben- und Trommelbremsen, bevorzugt für Scheibenbremsen, und ist in allen Fahrzeugtypen, insbesondere in PKW und Nutzfahrzeugen, einsetzbar. Ferner betrifft die Erfindung auch die Herstellung einer solchen Bremsbacke.

Aus der EP 0 754 875 B1 ist bereits eine Bremsbacke bekannt, die einen Verschleißanzeiger mit mehreren Leiterschleifen aufweist, der über Anschlussstecker und Kabel mit einem Steuer- oder Anzeigegerät elektrisch verbunden ist. Das Steuergerät detektiert einen unterbrochenen oder ggf. auch geschlossenen Stromkreis, wenn die Leiterschleifen nicht mehr leiten oder ggf. leiten. Das so erzeugte Signal dient zur Bestimmung des Verschleißzustands des Reibbelags. Die Herstellung und Montage einer solchen Bremsbacke wird durch die notwendigen Steckeranschlüsse und Kabelverbindungen beeinträchtigt, die sich auch nachteilig auf die Robustheit des Systems im täglichen Betrieb auswirken können.

Die DE 10 2008 032 818 A1 greift die genannte EP-Schrift als Stand der Technik auf und beschreibt eine Bremsbacke, bei der ein Sensor in Form eines passiven Transponders auf der Belagträgerplatte angebracht ist, der über einen Spulenstromkreis mit einer Verschleißpille im eigentlichen Reibbelag verbunden ist. Diese Verschleißpille kann den Verschleißzustand des Reibbelags in diskreten Stufen anzeigen. Ist der Transponder direkt im Reibbelag eingebettet, wird er bei Erreichen einer vorgegebenen Reibbelagstärke zerstört. Unterschiedliche Reibbelagstärken werden durch den Einbau mehrerer Transponder in entsprechenden Tiefen des Reibbelags angezeigt. Die Herstellung solcher Bremsbacken bzw. solcher Verschleißerkennungssysteme ist aufgrund der geschilderten Komplexität nach wie vor aufwendig und damit kostenintensiv.

Weitere Dokumente des Standes der Technik, welche ähnlich wie die vorgenannte DE-Schrift den Einsatz von passiven Transpondern bzw. den Einsatz der sog. RFID-Technologie zur Verschleißerkennung oder zur Überwachung der Belagdicke von Reibbelägen beschreiben, sind z. B. DE 10 2008 011 288 A1 und DE 10 2008 020 425 A1.
Aufgabe der vorliegenden Erfindung war somit die Bereitstellung einer Bremsbacke, welche mit einem System zur möglichst kontinuierlichen Überwachung des Verschleißzustandes eines Reibbelags ausgestattet ist und die Nachteile des Standes der Technik weitestgehend vermeidet. Darüber hinaus sollte eine solche Anordnung robust und im Alltagsbetrieb zuverlässig und möglichst einfach und damit kostengünstig herzustellen sein.
Diese Aufgabe wird erfindungsgemäß durch eine Bremsbacke der angegebenen Art mit den Merkmalen des Patentanspruchs 1 gelöst.
Gemäß der Erfindung ist ein Verschleißanzeiger vorgesehen, der an dem eigentlichen Reibbelag angeordnet und in den Reibbelag eingebettet ist. Dieser Verschleißanzeiger umfasst zumindest zwei Elemente. Einmal den eigentlichen Sensor zur Erkennung des Verschleißzustandes des Reibbelags. Dieser ist zur kontinuierlichen oder zumindest zur Detektion des Verschleißzustandes in kleinen Stufen ausgelegt. Dieser Sensor besteht bevorzugt aus Leiterschleifen, sogenanntes Widerstandsnetzwerk, die unterschiedlich weit in den Verschleißanzeiger und damit auch unterschiedlich weit in den Reibbelag hineinreichen. Mit fortschreitendem Reibbelagverschleiß werden die Leiterbahnen nach und nach unterbrochen und ein entsprechendes Signal, das von der im Verschleißanzeiger angeordneten Empfänger-/Sendeeinheit erzeugt wird, wird durch ein im Fahrzeug angeordnetes oder externes Steuer- und/oder Lesegerät empfangen und angezeigt. Bevorzugt weist dieser Sensor 1-10 Leiterschleifen auf, welche vorzugsweise aus metallischen Werkstoffen, wie z.B. Kupfer oder Aluminium, oder aus dem Fachmann bekannten elektrisch leitenden Kunststoffen, wie z.B. dotiertes Polyacetylen, gefertigt sind.

Die Empfänger-/Sendeeinheit als zweites Element ist vorzugsweise ein Transponder und in der bevorzugten Ausführungsform ein passiver Transponder. Dieser Transponder ermöglicht mittels einer drahtlosen Übertragungstechnik eine Signalübertragung und -verarbeitung. Bei der erfindungsgemäß bevorzugten Übertragungstechnik handelt es sich um die sogenannte RFID (Radio Frequency Identification)-Technologie und insbesondere auch um die SAW (Surface Acoustic Wave)-Technologie.

Der Transponder oder Tag eines RFID-Systems besteht in der Regel aus einem Mikrochip, einer Antenne, einem Träger oder Gehäuse und einer Energiequelle, welche bei passiven Transpondern z.B. durch einen Kondensator gebildet wird. Passive Transponder beziehen die Energie zur Versorgung des Mikrochips aus den empfangenen elektromagnetischen Wellen des Lesegeräts. Falls das zulässige Verschleißmaß des Reibbelags, welches durch die relative Lage des oben beschriebenen eigentlichen Verschleißsensors im Reibbelag bestimmt wird und von dem Verwendungszweck, der Belastung und den relevanten Sicherheitserfordernissen im konkreten Fall abhängig ist, erreicht wird, gelangt der Reibpartner mit dem Transponder bzw. dem Sensor in Kontakt, wodurch dieser in seiner Funktion verändert wird. Das vom Transponder rückgekoppelte Signal ist gegenüber dem unversehrten Zustand des Verschleißsensors verändert und wird von dem Steuer- und/oder Lesegerät entsprechend empfangen und angezeigt. Der fortschreitende Verschleiß (sukzessive Unterbrechung der Leiterbahnen) entspricht dabei einem auf dem Mikrochip gespeicherten Signalmuster, das mit dem Steuer- und/oder Lesegerät rückgekoppelt wird. Auf dem RFID-Mikrochip ist bevorzugt ein für jeden Bremsbackentyp spezifizierter, nicht löschbarer Identifikations-Code gespeichert. Hierdurch kann z.B. der Verschleißzustand der Reibbeläge der verschiedenen Fahrzeuge eines Unternehmens (z.B. Spedition) zentral gespeichert, verfolgt und ein Belagwechsel geplant werden, wodurch eine optimierte Nutzungsdauer und minimale Ausfallzeiten der Fahrzeuge sichergestellt werden können.

Anstelle eines RFID-Transponders oder RFID-Tag können erfindungsgemäß in einer bevorzugten Ausführungsform auch sogenannte SAW-Tags eingesetzt werden, welche den SAW-Effekt nutzen. Bei SAW-Tags werden über eine Antenne einfallende Mikrowellen letztlich in Oberflächenschallwellen (SAW) umgewandelt. Reflektierte SAW werden zurück in elektromagnetische Wellen übersetzt, die dann wiederum über die Antenne des Tags an ein Steuer- oder Lesegerät übertragen werden. Die Hauptvorteile der SAW-Tags gegenüber den normalen RFID-Systemen bestehen in der hohen Temperaturfestigkeit (z.B. bis 350°C), der großen Lesedistanz gegenüber den induktiven RFID-Systemen und in ihrer hohen mechanischen und chemischen Robustheit.

Für die Erfindung einsetzbare RFID- und SAW-Tags (Transponder) und die dazugehörigen Steuer- und Lesegeräte sind auf dem Markt erhältlich.

In einer weiteren bevorzugten Ausführungsform weist der erfindungsgemäße Verschleißanzeiger zusätzlich einen kontinuierlich oder diskontinuierlich arbeitenden Temperatursensor auf. Dieses Element beruht bevorzugt auf einem der folgenden Messprinzipien:
- Thermowiderstandseffekt (Metallbasierte Temperaturaufnehmer z.B. Platin- oder Kupferwiderstandsfühler)
- Mechanische Effekte (z.B. Ausdehnungs- oder Gasdrucksensoren)
- Thermoelektrische Effekte (z.B. Mantelthermoelemente, z.B NiCr Ni)
- Strahlungseffekt (z.B. Pyrometer)
- Temperaturmessfarbe
- Flüssigkeitskristalle
- Rauschthermometer, Lumineszenzthermometer mit Faseroptik
- Segerkegel
- Quarzthermometer
- Akustische Messverfahren

Dabei kann der Temperatursensor entweder den gesamten Reibbelag durchdringen und im direkten Kontakt mit der Bremsscheibe stehen oder aber innerhalb des Reibmaterials einer eventuell vorhandenen Zwischenschicht oder der Trägerplatte enden. Wenn ein direkter Kontakt zur Bremsscheibe besteht, verschleißt der Temperatursenor bzw. das Thermoelement bzw. die Thermodrähte mit dem Reibmaterial ohne dabei seine Sensoreigenschaften zu verlieren. Ebenfalls kann vorgesehen sein, dass das Thermoelement ab einer gewissen Verschleißgrenze zerstört wird und diese Zerstörung zur Sensierung der Erreichten Endlebensdauer des Reibbelages genutzt wird.

Bevorzugt wird dieses Sensorelement in den beschriebenen Volumenkörper eingebracht. Dabei kann es sich z. B. um ein Standard NiCr Ni Thermoelement Typ K handeln das z. B. von der Fa. http://www.thermagmbh.de bezogen werden kann. Ebenfalls können Thermoelemente aus einzelnen Themoleitungen mit Silica Isolierung und Keramikhülsen (wie bspw. Omegatit 450®) hergestellt und integriert werden.

In einer weiteren bevorzugten Ausführungsform weist der erfindungsgemäße Verschleißanzeiger zusätzlich ein sogenanntes Maximal-Temperatur-Speicherelement auf. Dieses Element besteht aus schmelzbaren, elektrisch leitenden Materialien mit einer definierten Schmelztemperatur. Die Schmelztemperatur entspricht dabei einer maximalen Temperatur, die beim Betrieb des Reibbelags nicht überschritten werden sollte. Bei Temperaturüberschreitung tritt durch die Schmelze ein Kurzschluss auf bzw. es wird ein Kontakt hergestellt, und ein entsprechendes Signal wird an das Steuer- oder Lesegerät und damit an den Fahrer des Fahrzeugs übertragen. Diese Funktionsweise entspricht (bis auf die Schmelze) grundsätzlich der, die auch beim beschriebenen eigentlichen Verschleißsensor vorliegt. Ein geeignetes, schmelzbares und elektrisch leitendes Material für das Maximal-Temperatur-Speicherelement ist z.B. Zink mit einer Schmelztemperatur von 420°C.

Bevorzugt weist das Maximal-Temperatur-Speicherelement zwei oder mehr der oben beschriebenen, schmelzbaren Einheiten auf, die ohne Kontakt zueinander angeordnet sind.

Die genannten Komponenten und weitere, nicht genannte Komponenten des erfindungsgemäßen Verschleißanzeigers sind nach Art und Anzahl grundsätzlich frei kombinierbar.

Der erfindungsgemäße Verschleißanzeiger oder Volumenkörper hat bevorzugt eine zylindrische oder kegelförmige Form und ist vorzugsweise im Bereich der Trägerplatte, in einer Durchgangsöffnung oder Vertiefung der Trägerplatte oder auf der Trägerplatte angebracht. Sein Durchmesser liegt typischerweise im Bereich von 10 - 30 mm und seine Höhe entspricht maximal der Dicke des auf der Trägerplatte aufgebrachten Reibbelags oder maximal der Dicke des Reibbelags zuzüglich der Dicke der Trägerplatte (Volumenkörper in Durchgangsöffnung der Trägerplatte montiert) oder zuzüglich der Tiefe der Vertiefung in der Trägerplatte. In der Regel wird sich der Volumenkörper nicht bis an die Oberfläche des Reibbelags erstrecken, sondern nur bis zu einer vorgegebenen Verschleißgrenze, die von Art und Benutzung des Reibbelags abhängt, in den Reibbelag hineinreichen.

Vorzugsweise ist vorgesehen, dass der Verschleißanzeiger oder Volumenkörper aus einem hitzebeständigen duroplastischen Material mit Reibmaterialeigenschaften hergestellt wird oder aus diesem besteht. Erfindungsgemäß bevorzugt ist hierfür die Verwendung von einer für den gewünschten Einsatzzweck vorgesehenen Reibmischung oder zumindest von typischen Bestandteilen einer solchen Mischung, wie z.B. Phenol- und/oder Epoxidharzen und/oder nicht leitenden Füllstoffen. In dieses Material sind dann die beschriebenen Elemente (Verschleißsensor, Transponder und Maximal-Temperatur-Speicherelement) eingebettet, d.h., der Zwischenraum zwischen diesen Elementen ist mit diesem Material ausgefüllt und diese Elemente sind von diesem Material, welches damit auch die äußere Schicht des Volumenkörpers bildet, umgeben.

Die Herstellung der erfindungsgemäßen Bremsbacke und damit auch die bevorzugte Anordnung des Verschleißanzeigers entspricht grundsätzlich dem Verfahren und der Anordnung, wie diese in der EP 0 754 875 B1 beschrieben sind. Auf die entsprechende Offenbarung in diesem Dokument, insbesondere auf die Ausführungen gemäß den Abschnitten [0013] - [0022], wird für die Zwecke der hier vorliegenden Beschreibung ausdrücklich Bezug genommen.

Eine erfindungsgemäße Bremsbacke wird vorzugsweise so hergestellt, dass in die Trägerplatte eine Durchgangsöffnung oder Vertiefung eingebracht wird und der fertige Verschleißanzeiger vor Aufpressen des Reibmaterials reibbelagseitig in diese Durchgangsöffnung oder Vertiefung eingesetzt wird. Danach wird das Reibmaterial (mit oder ohne Zwischenschicht und mit oder ohne zusätzlicher Klebeschicht) auf die Trägerplatte (den Belagträger) aufgepresst.

Die so erzielten Vorteile bestehen insbesondere darin, dass durch das Aufpressen des Reibmaterials auf den Belagträger bei vormontiertem Verschleißanzeiger dieser unlösbar im Reibmaterial eingebunden wird und seine Lage im Reibbelag nicht mehr verändern kann.

Die Ausnehmungen im Reibbelag zur Aufnahme des Verschleißanzeigers oder, was erfindungsgemäß auch vorgesehen ist, zur Aufnahme von zwei oder mehr Verschleißanzeigern, werden derart minimiert, dass die Reibfläche maximal genutzt wird. Durch die vollständige Einkapselung des Volumenkörpers mit und im Reibmaterial ist dieser vor Beschädigung während des Einbaus und dem Betrieb der Bremsbacke geschützt.

Durch die dargestellte Verfahrensweise entfallen die sonst notwendigen Arbeiten zur nachträglichen Montage des Verschleißanzeigers, bei denen Bohrungen angebracht und Verschmutzungen entfernt werden müssen. Die evtl. notwendige Durchgangsöffnung in der Trägerplatte wird im gleichen Stanzprozess erzeugt, mit dem z.B. die notwendigen Verankerungsausnehmungen vorgenommen werden.

Die in der vorangehenden Beschreibung und in dem nachfolgenden Ausführungsbeispiel genannten Ausführungsformen und Merkmale der vorliegenden Erfindung dienen nicht zu deren Beschränkung. Vielmehr umfasst die Erfindung jede sich dem Fachmann als vorteilhaft offenbarende Merkmalskombination.

Im Folgenden wird unter Bezugnahme auf die Zeichnung ein Ausführungsbeispiel der Erfindung näher erläutert.

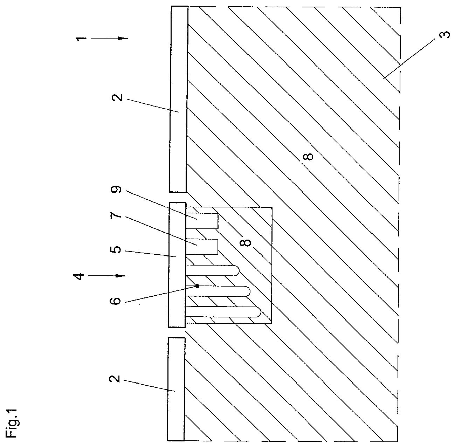

Fig. 1 zeigt eine Querschnittsdarstellung der erfindungsgemäßen Bremsbacke und des erfindungsgemäßen Verschleißanzeigers bzw. des Volumenkörpers.

Die in Fig. 1 gezeigte Bremsbacke 1 besteht aus einer Trägerplatte oder Belagträger 2, mit einem darauf aufgebrachten Reibbelag 3 und einem Verschleißanzeiger 4, der im Reibbelag 3 eingebettet ist. Dieser Verschleißanzeiger 4 ist in einer Durchgangsöffnung der Trägerplatte 2 angebracht und weist eine drahtlose Empfänger-/Sendeeinheit 5 (RFID- oder SAW-Tag), einen kontinuierlich bzw. mehrstufig messenden Verschleißsensor 6 (hier in Form von Leiterschleifen dargestellt) und ein Maximal-Temperatur-Speicherelement 7 und einen Temperatursensor 9 auf. Die Füllung und das diese Elemente 5-7 und 9 umschließende und die äußere Haut des Verschleißanzeigers 4 bildende Material 8 besteht aus dem gleichen Reibmaterial wie der Reibbelag 3 selbst.

## Patentansprüche

1. Bremsbacke (1) für Scheiben- oder Trommelbremsen, die eine Trägerplatte (2) mit einem daran befestigten Reibbelag (3) und mindestens einen Verschleißanzeiger (4) aufweist, **dadurch gekennzeichnet, dass** der Verschleißanzeiger (4) als ein in den Reibbelag (3) eingebetteter Volumenkörper ausgebildet ist, der einen Verschleißsensor (6) zur kontinuierlichen oder mehrstufigen Messung des Reibbelagverschleiß und eine Empfänger- und Sendeeinheit (5) zur drahtlosen Signalübertragung enthält.

2. Bremsbacke (1) nach Anspruch 1, **dadurch gekennzeichnet, dass** die Empfänger- und Sendeeinheit (5) ein RFID (Radio Frequency Identification)- Transponder oder ein SAW (Sound Acoustic Wave) - Transponder ist.

3. Bremsbacke (1) nach Anspruch 2, **dadurch gekennzeichnet, dass** der RFID-Transponder ein passiver Transponder ist.

4. Bremsbacke (1) nach Anspruch 2, **dadurch gekennzeichnet**, das die Empfänger- und Sendeeinheit (5) ein SAW-Transponder ist.

5. Bremsbacke (1) nach einem der Ansprüche 1 bis 4, **dadurch gekennzeichnet, dass** der Verschleißsensor (6) mehrere Leiterschleifen aufweist.

6. Bremsbacke (1) nach einem der Ansprüche 1 bis 5, **dadurch gekennzeichnet, dass** der Verschleißanzeiger (4) einen Temperatursensor (9) aufweist.

7. Bremsbacke (1) nach einem der Ansprüche 1 bis 6, **dadurch gekennzeichnet, dass** der Verschleißanzeiger (4) ein Maximal-Temperatur-Speicherelement (7) aufweist.

8. Bremsbacke (1) nach einem der Ansprüche 1 bis 7, **dadurch gekennzeichnet, dass** der Verschleißanzeiger (4) eine zylindrische oder kegelförmige Form aufweist.

9. Bremsbacke (1) nach einem der Ansprüche 1 bis 8, **dadurch gekennzeichnet, dass** der Verschleißanzeiger (4) einen maximalen Durchmesser von 10 - 30 mm aufweist.

10. Bremsbacke (1) nach einem der Ansprüche 1 bis 9, **dadurch gekennzeichnet, dass** der Verschleißanzeiger (4) aus demselben Material wie der Reibbelag (3) gefertigt ist.

11. Bremsbacke (1) nach einem der Ansprüche 1 bis 10, **dadurch gekennzeichnet, dass** der Verschleißanzeiger (4) in einer Durchgangsöffnung der Trägerplatte (2) angebracht ist.

12. Verschleißanzeiger (4) für eine Bremsbacke (1) nach einem der Ansprüche 1 bis 11.

13. Verfahren zur Herstellung einer Bremsbacke (1) nach einem der Ansprüche 1 bis 11 umfassend die Schritte:
a) Einbringen einer Durchgangsöffnung oder einer Vertiefung in die Trägerplatte (2),
b) Einsetzen des Verschleißanzeigers (4) reibbelagseitig in die Durchgangsöffnung oder die Vertiefung und
c) Aufpressen des Reibmaterials (3) auf die Trägerplatte (2), welches den Verschleißanzeiger (4) umschließt.

## Claims

1. Brake shoe (1) for disc or drum brakes, having a support plate (2) with a friction lining (3) that is attached thereto and at least one wear indicator (4), **characterized in that** the wear indicator (4) is formed as a volume body embedded in the friction lining (3) and that contains a wear sensor (6) for continuous or multistage measurement of the friction lining wear and a receiver and transmitter unit (5) for wireless signal transmission.

2. Brake shoe (1) according to claim 1, **characterized in that** the receiver and transmitter unit (5) is a RFID (radio frequency identification) transponder or a SAW (sound acoustic wave) transponder.

3. Brake shoe (1) according to claim 2, **characterized in that** the RFID transponder is a passive transponder.

4. Brake shoe (1) according to claim 2, **characterized in that** the receiver and transmitter unit (5) is a SAW transponder.

5. Brake shoe (1) according to any of the claims 1 to 4, **characterized in that** the wear sensor (6) has multiple conductor loops.

6. Brake shoe (1) according to any of the claims 1 to 5, **characterized in that** the wear indicator (4) has a temperature sensor (9).

7. Brake shoe (1) according to any of the claims 1 to 6, **characterized in that** the wear indicator (4) has a maximum temperature storage element (7).

8. Brake shoe (1) according to any of the claims 1 to 7, **characterized in that** the wear indicator (4) has a cylindrical or conical shape.

9. Brake shoe (1) according to any of the claims 1 to 8, **characterized in that** the wear indicator (4) has a maximum diameter of 10 - 30 mm.

10. Brake shoe (1) according to any of the claims 1 to 9, **characterized in that** the wear indicator (4) is made of the same material as the friction lining (3).

11. Brake shoe (1) according to any of the claims 1 to 10, **characterized in that** the wear indicator (4) is attached in a passage opening of the support plate (2).

12. Wear indicator (4) for a brake shoe (1) according to any of the claims 1 to 11.

13. Method for producing a brake shoe (1) according to any of the claims 1 to 11, comprising the steps of:
a) inserting a passage opening or an indentation into the support plate (2),
b) inserting the wear indicator (4) into the passage opening or the indentation on the friction lining side, and
c) pressing the friction material (3) onto the support plate (2), with the friction material (3) enclosing the wear indicator (4).

## Revendications

1. Mâchoire de frein (1) pour des freins à disque ou à tambour, qui présente une plaque de support (2) avec une garniture de friction (3) fixée à celle-ci et au moins un indicateur d'usure (4), **caractérisée en ce que** l'indicateur d'usure (4) est réalisé sous la forme d'un corps volumique noyé dans la garniture de friction (3), qui contient un détecteur d'usure (6) pour la mesure continue ou échelonnée de l'usure de la garniture de friction et une unité de réception et d'émission (5) pour une transmission de signal sans fil.

2. Mâchoire de frein (1) selon la revendication 1, **caractérisée en ce que** l'unité de réception et d'émission (5) est un transpondeur RFID (Radio Frequency Identification) ou un transpondeur SAW (Sound Acoustic Wave) .

3. Mâchoire de frein (1) selon la revendication 2, **caractérisée en ce que** le transpondeur RFID est un transpondeur passif.

4. Mâchoire de frein (1) selon la revendication 2, **caractérisée en ce que** l'unité de réception et d'émission (5) est un transpondeur SAW.

5. Mâchoire de frein (1) selon l'une quelconque des revendications 1 à 4, **caractérisée en ce que** le détecteur d'usure (6) présente plusieurs boucles de conducteur.

6. Mâchoire de frein (1) selon l'une quelconque des revendications 1 à 5, **caractérisée en ce que** l'indicateur d'usure (4) présente un capteur de température (9).

7. Mâchoire de frein (1) selon l'une quelconque des revendications 1 à 6, **caractérisée en ce que** l'indicateur d'usure (4) présente un élément de mémoire de température maximum (7).

8. Mâchoire de frein (1) selon l'une quelconque des revendications 1 à 7, **caractérisée en ce que** l'indicateur d'usure (4) présente une forme cylindrique ou conique.

9. Mâchoire de frein (1) selon l'une quelconque des revendications 1 à 8, **caractérisée en ce que** l'indicateur d'usure (4) présente un diamètre maximal de 10 à 30 mm.

10. Mâchoire de frein (1) selon l'une quelconque des revendications 1 à 9, **caractérisée en ce que** l'indicateur d'usure (4) est fabriqué avec le même matériau que la garniture de friction (3).

11. Mâchoire de frein (1) selon l'une quelconque des revendications 1 à 10, **caractérisée en ce que** l'indicateur d'usure (4) est placé dans une ouverture de passage de la plaque de support (2).

12. Indicateur d'usure (4) pour une mâchoire de frein (1) selon l'une quelconque des revendications 1 à 11.

13. Procédé de fabrication d'une mâchoire de frein (1) selon l'une quelconque des revendications 1 à 11, comprenant les étapes suivantes:
a) inserer une ouverture de passage ou un creux dans la plaque de support (2),
b) introduire l'indicateur d'usure (4) côté garniture de friction dans l'ouverture de passage ou le creux, et
c) presser sur la plaque de support (2) le matériau de friction (3), qui entoure l'indicateur d'usure (4).
